# EUROPÄISCHE PATENTSCHRIFT

(11) **EP 1 132 292 B1**
(45) Veröffentlichungstag und Bekanntmachung des Hinweises auf die Patenterteilung: **18.08.2004**
(21) Anmeldenummer: 01102445.2
(22) Anmeldetag: 03.02.2001
(51) Int. Cl.: B64D 11/06, B60R 22/26, B60R 22/12

(54) **Passagiersitz mit Sicherheitsmitteln**
Passenger seat with safety means
Siège de passager avec moyens de sécurité

(30) Priorität: 09.03.2000 DE 10011424; 24.10.2000 DE 10052595
(43) Veröffentlichungstag der Anmeldung: 12.09.2001
(73) Patentinhaber: Airbus Deutschland GmbH, 21129 Hamburg (DE)
(72) Erfinder: Romca, Jens, 54106 Kiel (DE); Müller, Jochen, 54106 Kiel (DE); Schumacher, Markus, 21614 Buxtehude (DE)
(74) Vertreter: Hansmann, Dierk, Dipl.-Ing.

(56) Entgegenhaltungen:
- DE-A- 3 816 834
- US-A- 3 823 978

## Beschreibung

Die Erfindung betrifft einen Passagiersitz mit Sicherheitsmitteln, wobei der Passagiersitz im wesentlichen ein Sitzteil und eine Rückenlehne aufweist und ein Sicherheitsgurt am Sitz angeordnet ist, der mit einem Gurtschloss und einem Gurtschließteil im Beckenbereich eines Passagiers verschließbar ist, der Sicherheitsgurt im Bereich der Anbringungspunkte am Sitz bzw. Sitzgestell mindestens eine Gurtpeitsche aufweist, wobei die mindestens eine Gurtpeitsche ein Sicherheitsgurtband sowie im Bereich eines an der Gurtpeitsche angeordnetem Gurtpeitschenendstückes das Gurtschließteil aufweist und die mindestens eine Gurtpeitsche in Ruheposition im Bereich seitlich der Rückenlehnen positionierbar und im Betätigungszustand über das Becken eines sitzenden Passagiers führbar ist.

Bei gegenwärtig verwendeten Passagiersitzen in Verkehrsflugzeugen werden Sicherheitsgurte verwendet, die als Statikgurte ausgebildet sind und deren Gurtband einen Beckengurt bildet, der mit einem Gurtschloss im Bauchbereich eines sitzenden Passagiers verschließbar ist. Die Gurtbänder sind bei einem nichtbenutzten Sitz meistens auf dem Sitzteil abgelegt, was natürlich für einen Fluggast, der beim Einsteigen in das Flugzeug sehr schnell seinen Sitzplatz einnehmen möchte, hinderlich und beschwerlich ist. Oft wird sich auf die über die Sitzfläche gekreuzten Gurtbänder gesetzt und der Fluggast muss auf beschwerliche Art die Gurtenden "herausfischen". Auch ist es für den betrieblichen Ablauf der Kabinenreinigung während der Bodenzeit eines Flugzeuges nachteilig, wenn an jedem Sitz die Gurtenden geordnet werden müssen. Da aufgrund der Anzahl der Passagiersitze in einem Verkehrsflugzeug diese Vorbereitung der Gurte einen beachtlichen Zeitaufwand verursacht, verlängert sich die benötigte Zeit für die Kabinenreinigung, was sich negativ auf die Bodenzeit eines Flugzeuges zwischen den Flügen - eine maßgebliche Größe für die Wirtschaftlichkeit eines Flugzeuges - auswirkt.
Aus DE-A-38 16 834 ist ein Passagiersitz mit einem Sischerheitsgurtsystem bekannt, welches seitlich der Rückenlehne angeordnete Schwenkarme aufweist, die in vorgeschwenkter Position Beckengurte für die Sicherung eines Passagiers führen. In Parkstellung sind die Schwenkarme seitlich neben der Rückenlehne positioniert. Entsprechende Vorkehrungen für ein erleichtertes Greifen des am jeweiligen Schwenkarm positionierten Gurtschlosses bei Nutzung des Gurtsystems sind nicht vorgesehen. Mit dem Greifen des Gurtschlosses erfolgt ein Vorschwenken der Schwenkarme, wobei gleichzeitig jeweils ein Schultergurt von der Verbindungsstelle an der Rückenlehne zu dem am jeweiligen Schwenkarm positionierten Gurtschloss führt.
Aus US-A-3 823 978 ist ein Fahrzeugsitz bekannt, deren Gurtsystem Gurtpeitschen aufweist, die seitlich des Sitzes angeordnet sind. Ein Einschwenken der Gurtpeitschen in den Bereich der Rückenlehne und damit bei einer Parkstellung aus dem Zugriffsbereich für einen Passagier heraus ist hier nicht vorgesehen.

Der Erfindung liegt daher die Aufgabe zugrunde, einen Passagiersitz mit Sicherheitsmitteln derart auszustatten, dass die aus dem Stand der Technik bekannten Nachteile vermieden werden und für den Fluggast ein vereinfachter Zugriff zu den Gurtenden ermöglicht wird.

Diese Aufgabe wird bei einer gattungsgemäßen Vorrichtung mit den im Patentanspruch 1 genannten Maßnahmen gelöst.

Dabei ist insbesondere von Vorteil, dass ein Fluggast nicht mehr umständlich die Gurtenden zum Verschließen des Sicherheitsgurtes von der Sitzfläche seines Passagiersitzes entfemen muss oder die Gurtenden umständlich in Position gebracht werden müssen. Die Wirtschaftlichkeit eines Verkehrsflugzeuges kann erhöht werden, wenn die notwendige Kabinenreinigungszeit während der Bodenzeit eines Flugzeuges zwischen aufeinanderfolgenden Flügen verkürzt werden kann, da ein Ordnen der Sicherheitsgurte an jedem Passagiersitz wegfällt. Ein Zugriff zu den Gurtenden ist für den Fluggast in einfacher und komfortabler Weise möglich.

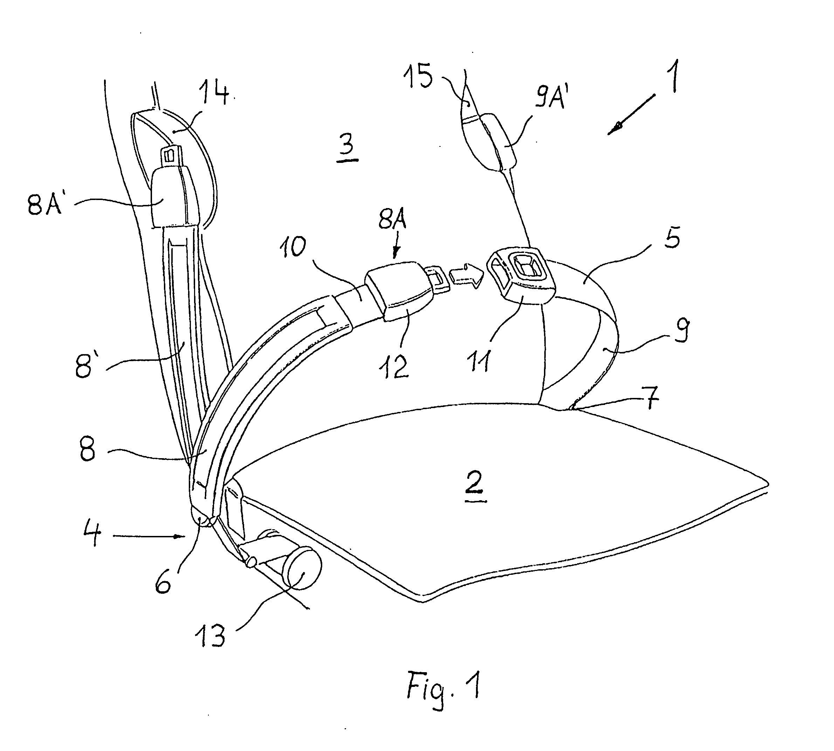

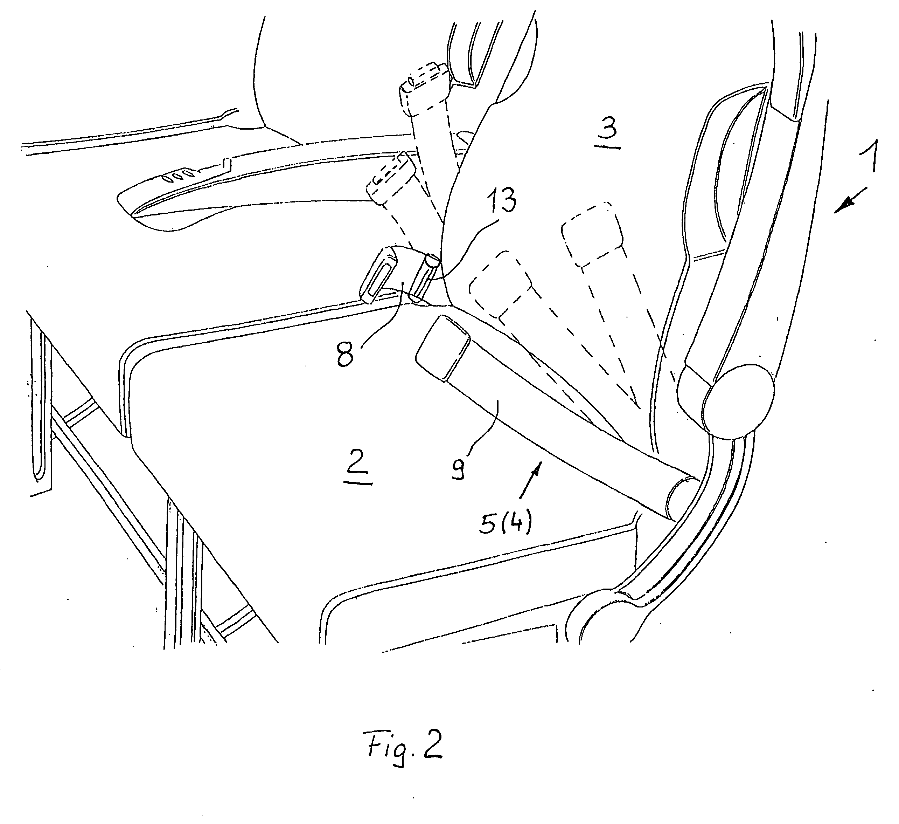

Weiterbildungen und vorteilhafte Ausgestaltungen sind in den Unteransprüchen 2 bis 8 angegeben sowie in der nachfolgenden Figurenbeschreibung dargestellt. In der Zeichnung sind Ausführungsbeispiele der Erfindung dargestellt, die nachstehend anhand der Figuren 1 und 2 näher beschrieben werden. In den Figuren sind gleiche Bauteile mit gleichen Bezugszeichen versehen.

Es zeigt
- Fig. 1: eine Ansicht eines Passagiersitzes mit einem erfindungsgemäßen Sicherheitsmittel und
- Fig. 2: einen Ausschnitt einer Passagiersitzgruppe mit einer Ansicht des Übergangsbereichs zwischen Sitzteil und Rückenlehne mit einer zweiten Ausführungsform der erfindungsgemäßen Sicherheitsmittel.

In Fig. 1 ist ein Passagiersitz 1 ersichtlich, der ein Sitzteil 2 sowie eine Rückenlehne 3 aufweist. Am Passagiersitz 1 sind Sicherheitsmittel 4 vorgesehen. Die Sicherheitsmittel 4 umfassen in der gezeigten Ausführung einen Beckengurt 5, der als Zweipunkt-Sicherheitsgurt beidseitig der Sitzfläche am Passagiersitz 1 an strukturfesten Anschlusspunkten 6 und 7 (z.B. am Sitzgestell) befestigt ist. Die Anschlusspunkte 6 und 7 am Passagiersitz 1 sind so angeordnet, dass flexible Gurtpeitschen 8 und 9 ausgehend von diesen Anschlusspunkten 6 und 7 aufgrund ihrer Eigensteifigkeit das Sicherheitsgurtband 10 in einer bestimmten Position halten, in der für den Passagier ein leichter Zugriff zum Gurtschloss 11 und zum Gurtschließteil 12 ermöglicht ist. Als Material für die Gurtpeitschen ist beispielsweise Kunststoff oder Verbundmaterial vorgesehen, wobei das Material flexibel, zurückfedernd und anpassbar an die Körperform sein sollte, um einen hohen Tragekomfort zu gewährleisten. Eine Aufrollautomatikeinrichtung 13 ist im Bereich des Sitzteils 2, vorzugsweise am oder im seitlichen Sitzpolster angeordnet. Mit der Aufrollautomatikeinrichtung 13 kann das Sicherheitsgurtband 10 entsprechend der dem Fluggast angepassten Länge automatisch eingestellt werden und eine manuelle Längenverstellung entfällt. Aufrollautomatiken von Sicherheitsgurten sind aus dem Stand der Technik in vielfältigen Ausführungen bekannt und können für den vorgesehenen Zweck an einem Fluggastsitz verwendet werden.

Die Gurtpeitsche 8 führt das Gurtband 10 mit dem Gurtschließteil 12 in der Ruhelage in eine Aussparung 14, die im seitlichen Bereich der Rückenlehne 3 zur Aufnahme des Gurtpeitschenendstückes 8A vorgesehen ist. Es ist mit 8A' die Position der Gurtpeitsche 8' dargestellt, wenn sie sich in Ruhelage befindet. Vorzugsweise weist die Gurtpeitsche 8 (und entsprechend die Gurtpeitsche 9) eine Eigenspannung auf, mit der selbsttätig die Position im Rückenlehnenbereich erreicht wird. Die Aussparung 14 ist so gestaltet, dass ein Passagier, der sich nach dem Hinsetzen Anschallen möchte, einen ausreichenden Greifraum vorfindet, um das Gurtpeitschenendstück 8A zu greifen und nach vorn über sein Becken zu schwenken. Entsprechend dazu verweilt die Gurtpeitsche 9 mit ihrem Endstück 9A und daran angeordnetem Gurtschloss 11 in Ruheposition in einer Aussparung 15 auf der der Aussparung 14 gegenüberliegenden Seite des Rückenpolsters 3. Zur Benutzung des Gurtes 5 kann ein Passagier die Gurtpeitsche 9 über sein Becken schwenken und das Gurtschließteil 12 in das Gurtschloss 11 einführen und verriegeln. Das Gurtband 10 wird mittels der Aufrollautomatik entsprechend der benötigten Länge eingestellt.

In der Fig. 2 sind in einer zweiten Ausgestaltung die Sicherheitsmittel 4 am Passagiersitz 1 mit dem Beckengurt 5 dargestellt. In wesentlichen Teilen entspricht diese zweite Form des Sicherheitsmittels 4 der bereits beschriebenen ersten Ausführung. Im Unterschied zur ersten Ausführung ist eine Aufrollautomatikeinrichtung 13' hier in die Gurtpeitsche 8 integriert. Eine solche Ausgestaltung hat den Vorteil, dass die Sicherheitsmittel 4 in kompakter Form auf wenige Bauteile beschränkt sind und beim Austausch oder notwendigem Ersatz ein geringer Montageaufwand entsteht.

Eine weitere, zeichnerisch nicht dargestellte Ausführung der Erfindung ist mit einem Beckengurt 5 realisiert, der nur eine Gurtpeitsche mit einem Gurtschließteil aufweist und auf der gegenüberliegenden Sitzseite am Sitz, im Bereich der Rückenlehne in Höhe des Beckens eines Passagieres, das entsprechende Gurtschloss (gegebenenfalls mit dazugehöriger Gurtpeitsche) fest angeordnet ist.

Mit einer derartigen Ausführung ist eine Einhandbedienung des Gurtes ermöglicht. Das Gurtschließteil kann mit einer Hand in das fixierte Gurtschloss eingeführt werden und auch das Öffnen kann einhändig erfolgen, da ein Rückfedern oder Positionsveränderungen des Gurtschlosses nicht möglich sind.

## Patentansprüche

1. Passagiersitz mit Sicherheitsmitteln, wobei der Passagiersitz (1) im wesentlichen ein Sitzteil (2) und eine Rückenlehne(3) aufweist und ein Sicherheitsgurt (5) am Sitz angeordnet ist, der mit einem Gurtschloss (11) und einem Gurtschließteil(12) im Beckenbereich eines Passagiers verschließbar ist, der Sicherheitsgurt (5) im Bereich der Anbringungspunkte (6, 7) am Sitz bzw. Sitzgestell (1) mindestens eine Gurtpeitsche (8, 9) aufweist, wobei die mindestens eine Gurtpeitsche (8) ein Sicherheitsgurtband (10) sowie im Bereich eines an der Gurtpeitsche (8) angeordneten Gurtpeitschenendstückes (8A) das Gurtschließteil (12) aufweist und die mindestens eine Gurtpeitsche (8) in Ruheposition im Bereich seitlich der Rückenlehnen (3) positionierbar und im Betätigungszustand über das Becken eines sitzenden Passagiers führbar ist, **dadurch gekennzeichnet, dass** im seitlichen Bereich der Rückenlehnen (3) in Höhe des mindestens einen Gurtpeitschenendstücks (8A' ) eine Aussparung (14) vorgesehen ist, die einen Greifraum zum Ergreifen der Gurtenden bildet.

2. Passagiersitz nach Anspruch 1, **dadurch gekennzeichnet, dass** eine weitere Gurtpeitsche (9) mit einem Gurtpeitschenendstück (9A) versehen ist, welches das Gurtschloss (11) aufweist und für das Gurtpeitschenendstück (9A') eine Aussparung (15) im seitlichen Bereich der Rückenlehne vorgesehen ist.

3. Passagiersitz nach einem der Ansprüche 1 oder 2, **dadurch gekennzeichnet, dass** die Aussparungen (14, 15) an der Rückenlehne (3) in Taillenhöhe eines sitzenden Passagiers vorgesehen sind.

4. Passagiersitz nach einem der Ansprüche 1 bis 3, **dadurch gekennzeichnet, dass** die Gurtpeitschen (8,9) aus flexiblen Material mit einer Eigensteifigkeit bestehen.

5. Passagiersitz nach einem der Ansprüche 1 bis 4, **dadurch gekennzeichnet, dass** der Sicherheitsgurt (5) mit einer Aufrollautomatikeinrichtung (13) für das Sicherheitsgurtband (10) versehen ist.

6. Passagiersitz nach Anspruch 5, **dadurch gekennzeichnet, dass** die Aufrollautomatikeinrichtung (13) an oder in der Gurtpeitsche (8, 9) angeordnet ist.

7. Passagiersitz nach Anspruch 5, **dadurch gekennzeichnet, dass** die Aufrollautomatikeinrichtung (13) am oder im Sitzteil (2) angeordnet ist.

8. Passagiersitz nach einem der vorangegangenen Ansprüche, **dadurch gekennzeichnet, dass** das Gurtschloss (11) im Bereich der Rückenlehne in Höhe des Beckens eines Passagiers fest angeordnet ist.

## Claims

1. Passenger seat with safety equipment, wherein the passenger seat (1) substantially comprises a seat part (2) and a back rest (3) and there is disposed on the seat a seat belt (5), which is fastenable in the pelvic region of a passenger by means of a belt buckle (11) and a belt locking part (12), the seat belt (5) comprises at least one belt whip (8, 9) in the region of the points (6, 7) of attachment to the seat and/or seat frame (1), wherein the at least one belt whip (8) comprises a seat belt band (10) as well as the belt locking part (12) in the region of a belt whip end piece (8A) disposed on the belt whip (8) and the at least one belt whip (8) in inoperative position is positionable in the region laterally of the back rests (3) and in the operative state is conveyable over the pelvis of a seated passenger, **characterized in that** in the lateral region of the back rests (3) at the height of the at least one belt whip end piece (8A') a recess (14) is provided, which forms a grab space for grabbing the belt ends.

2. Passenger seat according to claim 1, **characterized in that** a further belt whip (9) is provided with a belt whip end piece (9A), which comprises the belt buckle (11) and for the belt whip end piece (9A') a recess (15) is provided in the lateral region of the back rest.

3. Passenger seat according to one of claims 1 or 2, **characterized in that** the recesses (14, 15) in the back rest (3) are provided level with the waist of a seated passenger.

4. Passenger seat according to one of claims 1 to 3, **characterized in that** the belt whips (8, 9) are made of flexible material with an inherent stiffness.

5. Passenger seat according to one of claims 1 to 4, **characterized in that** the seat belt (5) is provided with an automatic winding device (13) for the seat belt band (10).

6. Passenger seat according to claim 5, **characterized in that** the automatic winding device (13) is disposed on or in the belt whip (8, 9).

7. Passenger seat according to claim 5, **characterized in that** the automatic winding device (13) is disposed on or in the seat part (2).

8. Passenger seat according to one of the preceding claims, **characterized in that** the belt buckle (11) is disposed in a fixed manner in the region of the back rest level with the pelvis of a passenger.

## Revendications

1. Siège de passager avec moyens de sécurité, dans lequel le siège (1) du passager présente essentiellement une assise (2) et un dossier (3) et une ceinture de sécurité (3) est disposée sur le siège, laquelle peut être verrouillée à l'aide d'une boucle de fermeture (11 ) et d'une languette (12) dans la région du bassin d'un passager, la ceinture de sécurité (5) présente dans la région des points d'ancrage (6, 7) sur le siège ou la carcasse du siège (1) au moins une gaine (8, 9) de ceinture, ladite au moins une gaine présentant une sangle (10) de ceinture de sécurité ainsi que la languette (12) dans la région d'une partie extrême (8A) de la gaine de ceinture disposée sur la gaine (8) de ceinture et ladite au moins une gaine (8) de ceinture peut être positionnée en position de repos dans la région à côté du dossier (3) et pouvant être amenée en état de fonctionnement au-dessus du bassin d'un passager assis, **caractérisé en ce que** dans la région latérale du dossier (3), il est prévu, à hauteur de ladite au moins une partie extrême (8A') de la gaine de ceinture, un évidement (14) qui forme un espace de préhension pour saisir l'extrémité de la ceinture.

2. Siège de passager selon la revendication 1, **caractérisé en ce qu'**une autre gaine (9) de ceinture est pourvue d'une partie extrême (9A) de gaine de ceinture qui présente la boucle de fermeture (11) et qu'un évidement (15) est prévu dans la région latérale du dossier pour la partie extrême (9A') de la gaine de ceinture.

3. Siège de passager selon une des revendications 1 ou 2, **caractérisée en ce que** les évidements (14, 15) sont prévus dans le dossier (3) à hauteur d'un passager assis.

4. Siège de passager selon une des revendications 1 à 3, **caractérisée en ce que** les gaines (8, 9) de ceinture sont en matériau flexible ayant une rigidité propre.

5. Siège de passager selon une des revendications 1 à 4, **caractérisée en ce que** la ceinture de sécurité (5) est pourvue d'un dispositif d'enroulement automatique (13) pour la sangle (10) de la ceinture de sécurité.

6. Siège de passager selon la revendication 5, **caractérisé en ce que** le dispositif d'enroulement automatique (13) est disposé sur ou dans la gaine (8, 9) de ceinture

7. Siège de passager selon la revendication 5, **caractérisé en ce que** le dispositif d'enroulement automatique (13) est disposé sur ou dans l'assise (2).

8. Siège de passager selon une des revendications précédentes, **caractérisé en ce que** la boucle de fermeture (11) est fixée dans la région du dossier à hauteur du bassin d'un passager.
